# EUROPEAN PATENT APPLICATION

(11) **EP 4 578 914 A1**
(43) Date of publication of application: **02.07.2025**
(21) Application number: 23220218.4
(22) Date of filing: 26.12.2023
(51) Int. Cl.: C08L 69/00

(54) **FLAME RETARDANT POLYCARBONATE COMPOSITIONS**

(71) Applicant: SHPP Global Technologies B.V., 4612 PX Bergen op Zoom (NL)
(72) Inventor: VAN DER MEE, Mark Adrianus Johannes, Bergen op Zoom (NL); VAN DE GRAMPEL, Robert Dirk, Bergen op Zoom (NL); VANDORMAEL, Bart, Bergen op Zoom (NL); VOLLENBERG, Peter, Mt Vernon IN (US); PREHN JR., Frederick C., Mt Vernon IN (US)
(74) Representative: Balder IP Law, S.L.

(57) **Abstract**

A polycarbonate composition includes: a homopolycarbonate; a polycarbonate including repeating units derived from a monomer including a pendant ester group; an elastomer-modified graft copolymer including an acrylonitrile butadiene styrene copolymer, an aromatic vinyl copolymer including a styrene acrylonitrile copolymer, or a combination thereof; a non-fluorinated flame retardant, optionally, a poly(carbonate-siloxane), and optionally, an additive composition, wherein the sum of the wt% of the homopolycarbonate, the polycarbonate including repeating units derived from a monomer including a pendant ester group, elastomer-modified graft copolymer including an acrylonitrile butadiene styrene copolymer, the aromatic vinyl copolymer including a styrene acrylonitrile copolymer, or a combination thereof, the non-fluorinated flame retardant, the optional styrene acrylonitrile copolymer, the optional poly(carbonate-siloxane), and the optional additive composition is 100 wt%, and wherein a sample of the composition has a LTL-94 flame test rating of V-0 at a thickness of 1.5 mm or thinner.

## Description

### BACKGROUND

This disclosure relates to polycarbonate compositions, and in particular to flame-retardant polycarbonate compositions, methods of manufacture, and uses thereof in thin-wall articles.

Polycarbonates are useful in the manufacture of articles and components for a wide range of applications, from automotive parts to electronic appliances. Because of their broad use, particularly in electronics, it is desirable to provide polycarbonate compositions with excellent physical, optical, and thermal properties in an adequate processing window. Such properties may be particularly difficult to achieve in thin-wall applications. In addition, more stringent regulations are being put in place to reduce or eliminate the presence of halogens, in particular fluorine, in the final products.

There accordingly remains a need in the art for flame-retardant polycarbonate compositions suitable for thin-wall applications. It would be a further advantage if the compositions were essentially fluorine-free.

### SUMMARY

The above-described and other deficiencies of the art are met by a polycarbonate composition including: a homopolycarbonate; a polycarbonate including repeating units derived from a monomer including a pendant ester group; an elastomer-modified graft copolymer including an acrylonitrile butadiene styrene copolymer, an aromatic vinyl copolymer including a styrene acrylonitrile copolymer, or a combination thereof; a non-fluorinated flame retardant, optionally, a poly(carbonate-siloxane), and optionally, an additive composition, wherein the sum of the wt% of the homopolycarbonate, the polycarbonate including repeating units derived from a monomer including a pendant ester group, elastomer-modified graft copolymer including an acrylonitrile butadiene styrene copolymer, the aromatic vinyl copolymer including a styrene acrylonitrile copolymer, or a combination thereof, the non-fluorinated flame retardant, the optional poly(carbonate-siloxane), and the optional additive composition is 100 wt%, and wherein a sample of the composition has a LTL-94 flame test rating of V-0 at a thickness of 1.5 mm or thinner.

In another aspect, a method of manufacture includes combining the above-described components to form a polycarbonate composition.

In yet another aspect, an article includes the above-described polycarbonate composition.

In still another aspect, a method of manufacture of an article includes molding, extruding, or shaping the above-described polycarbonate composition into an article.

The above described and other features are exemplified by the following detailed description, examples, and claims.

### DETAILED DESCRIPTION

Polycarbonates are thermoplastic resins with many desirable properties, but are inherently flammable. Current design trends are focused on thinner designs for purposes of slimness, weight reduction, and size reduction of the overall final product, as well as to for the purpose of more complex designs. The processing characteristics of the polycarbonates and the physical properties they impose on the finished products make it desirable to blend the polycarbonates with other polymeric materials such as a styrene-acrylonitrile copolymer (SAN), e.g., to improve the flow and processability, and/or acrylonitrile-butadiene-styrene graft copolymer (ABS), to improve the flow characteristics and low temperature impact resistance. However, polycarbonate blends including an ABS resin, are particularly challenging substrates due to the inherently high flammability of the ABS resin component. SAN is also inherently flammable, having an HB rating in the UL-94 flame test, for resin blends including highly flammable polymers, such as the ABS resins, it is necessary to add relatively large amounts of flame retardant additives, sometimes as high as the amount of the ABS resin present in the resin blend to achieve robust flame performance (e.g., V-0) for molded parts having relatively thin walls (example, less than or equal to 2 millimeters wall thickness).

An added consideration is that polycarbonates tend to drip when exposed to a flame, and this behavior worsens as the wall thickness decreases. The In order to maintain the desired flame test rating, conventional compositions including ABS, SAN, or both ABS and SAN often incorporate fluorine-based anti-drip agents in combination with the high levels of flame retardant additives.

Given that more stringent regulations are being considered to reduce or eliminate the addition of halogenated materials to the compositions used to make final products (e.g., perfluoroalkyl and polyfluoroalkyl substances (PFAS)), there is a need in the art for polycarbonate compositions that may achieve a V-0 or V-1 flame test rating for thin-walled molded samples and/or thin films, while also minimizing and/or eliminating the addition of PFAS into the polycarbonate compositions used to make the molded samples and/or thin films.

The inventors hereof have discovered that polycarbonate compositions including: a homopolycarbonate, a polycarbonate including repeating units derived from a monomer including a pendant ester group; an aromatic vinyl copolymer including a styrene acrylonitrile copolymer, or a combination thereof; and optionally a poly(carbonate-siloxane); in combination with a non-fluorinated flame retardant may provide the desired flame retardance while eliminating the need for halogenated additives, such as fluorinated flame retardants and anti-drip agents. Surprisingly, unlike conventional compositions, fluorinated anti-drip agents may be omitted in the present polycarbonate compositions, thus eliminating intentionally added fluorine while providing the desired flame testing rating. Anti-drip technology is usually required when the samples being tested are thin gauge and/or are prepared from resins with a high melt volume rate (MVR). The incorporation of ABS, SAN, or both ABS and SAN may increase the melt volume rate (MVR). As discussed able, anti-drip agents are usually required when the samples being tested are thin gauge and/or are prepared from resins with a high melt volume rate (MVR). The polycarbonate compositions minimize/eliminate fluorinated flame retardants and anti-drip agents, yet are able to achieve a LTL-94 flame test rating of V-0 at a thickness of 1.5 mm or thinner and may be considered "essentially fluorine-free."

As used herein, the phrase "essentially fluorine-free" means that the amount of calculated intentionally added fluorine present in the composition is 1500 ppm or less, less than 1000 ppm, less than 500 ppm, less than 100 ppm, or less than 50 ppm. For example, if 0.1 wt% encapsulated polytetrafluoroethylene, (e.g., TSAN, which is about 50 wt% PTFE and PFTE estimated to have about 76 wt% fluorine content), the amount of calculated intentionally added fluorine would equal 657 ppm. Further, the polycarbonate compositions of the present disclosure may have zero intentionally added fluorine.

In some aspects, the polycarbonate compositions may have a UL-94 flame test rating of V-0 at a thickness of 1.5 mm or thinner and be considered "essentially halogen-free" per IEC 61249-2-21 or UL 746H. As used herein, the phrase "essentially halogen-free" is as defined by IEC 61249-2-21 or UL 746H. According to International Electrochemical Commission, Restriction Use of Halogen (IEC 61249-2-21), a composition should include 900 parts per million (ppm) or less of each of chlorine and bromine and also include 1500 ppm or less of total bromine, chlorine, and fluorine content. According to LTL 746H, a composition should include 900 ppm or less of each of chlorine, bromine, and fluorine and 1500 ppm or less of the total chlorine, bromine, and fluorine content. The bromine, chlorine, and fluorine content in ppm may be calculated from the composition or measured by elemental analysis techniques. Conventional non-halogenated flame retardants may include or exclude halogens, but commonly employed anti-drip agents include PTFE-encapsulated styrene-acrylonitrile copolymers (e.g., TSAN) and thus include fluorine. Non-halogenated flame retardants that are not brominated, chlorinated, or fluorinated have been used in conventional polycarbonate compositions, but an anti-drip agent is usually present in combination with the non-halogenated flame retardant, causing the halogen content of the composition to exceed the 1500 ppm total halogen limit per IEC 61249-2-21 and LTL 746H. Similarly, when non-halogenated flame retardants that are not brominated or chlorinated, but are fluorinated are used in combination with a fluorinated anti-drip agent, then the halogen content of the composition due to the presence of fluorine exceeds the 1500 ppm total halogen limit per IEC 61249-2-21 or UL 746H. Therefore, it would be a particular advantage if conventional anti-drip agents could be minimized or eliminated, so that the anti-drip agent does not contribute halogen content to the total halogen content of the compositions. Accordingly, a variety of non-halogenated flame retardants that include or exclude halogens may be used in polycarbonate compositions so that the compositions may be considered "essentially halogen-free" per IEC 61249-2-21 or LTL 746H.

The polycarbonate compositions include a homopolycarbonate, a polycarbonate including repeating units derived from a monomer including a pendant ester group, aromatic vinyl copolymer including a styrene acrylonitrile copolymer, or a combination thereof, a non-fluorinated flame retardant; optionally a poly(carbonate-siloxane); and optionally, an additive composition. The individual components of the polycarbonate compositions are described in detail below.

"Polycarbonate" as used herein means a polymer having repeating structural carbonate units of formula (1) 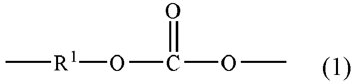 in which at least 60 percent of the total number of R¹ groups contain aromatic moieties and the balance thereof are aliphatic, alicyclic, or aromatic. In an aspect, each R¹ is a C₆₋₃₀ aromatic group, that is, contains at least one aromatic moiety. R¹ may be derived from an aromatic dihydroxy compound of the formula HO-R¹-OH, in particular of formula (2)

HO-A¹-Y¹-A²-OH (2)

wherein each of A¹ and A² is a monocyclic divalent aromatic group and Y¹ is a single bond or a bridging group having one or more atoms that separate A¹ from A². In an aspect, one atom separates A¹ from A². Preferably, each R¹ may be derived from a bisphenol of formula (3) 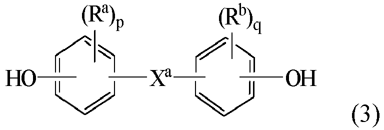 wherein R^{a} and R^{b} are each independently a halogen, C₁₋₁₂ alkoxy, or C₁₋₁₂ alkyl, and p and q are each independently integers of 0 to 4. It will be understood that when p or q is less than 4, the valence of each carbon of the ring is filled by hydrogen. Also in formula (3), X^{a} is a bridging group connecting the two hydroxy-substituted aromatic groups, where the bridging group and the hydroxy substituent of each C₆ arylene group are disposed ortho, meta, or para (preferably para) to each other on the C₆ arylene group. In an aspect, the bridging group X^{a} is single bond, - O-, -S-, -S(O)-, -S(O)₂-, -C(O)-, or a C₁₋₆₀ organic group. The organic bridging group may be cyclic or acyclic, aromatic or non-aromatic, and may further include heteroatoms such as halogens, oxygen, nitrogen, sulfur, silicon, or phosphorus. The C₁₋₆₀ organic group may be disposed such that the C₆ arylene groups connected thereto are each connected to a common alkylidene carbon or to different carbons of the C₁₋₆₀ organic bridging group. In an aspect, p and q is each 1, and R^{a} and R^{b} are each a C₁₋₃ alkyl group, preferably methyl, disposed meta to the hydroxy group on each arylene group.

Other useful dihydroxy compounds of the formula HO-R¹-OH include aromatic dihydroxy compounds of formula (6) 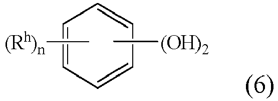 wherein each R^{h} is independently a halogen atom, C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4. The halogen is usually bromine.

Some illustrative examples of specific dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or a combination thereof.

The polycarbonates may have an intrinsic viscosity, as determined in chloroform at 25°C, of 0.3 to 1.5 deciliters per gram (dl/gm), preferably 0.45 to 1.0 dl/gm. The polycarbonates may have a weight average molecular weight (Mw) of 10,000 to 200,000 g/mol, preferably 20,000 to 100,000 g/mol, as measured by gel permeation chromatography (GPC), using a crosslinked styrene-divinylbenzene column using polystyrene standards and calculated for polycarbonate. GPC samples are prepared at a concentration of 1 mg per ml, and are eluted at a flow rate of 1.5 ml per minute.

The polycarbonate compositions include a homopolycarbonate (wherein each R¹ in the polymer is the same). In an aspect, the homopolycarbonate in the polycarbonate composition is derived from a bisphenol of formula (2), preferably bisphenol A, in which each of A¹ and A² is p-phenylene and Y¹ is isopropylidene in formula (2).

In some aspects, the homopolycarbonate is a bisphenol A homopolycarbonate. The bisphenol A homopolycarbonate may have: a melt flow rate of 3-150, per 10 min at 300 °C and a 1.2 kg load and a Mw of 15,000-40,000, g/mole, preferably 20,000-30,000 g/mole, more preferably 21,000 to 23,0000, each as measured as described above. In some aspects, the polycarbonate includes a linear or branched bisphenol A homopolycarbonate. In some aspects, the homopolycarbonate includes a linear bisphenol A homopolycarbonate having a weight average molecular weight of 26,000 to 40,000 g/mol, preferably 27,000 to 35,000 g/mol, as determined by gel permeation chromatography using polystyrene standards and calculated for polycarbonate; or a linear bisphenol A homopolycarbonate having a weight average molecular weight of 15,000 to 25,000 g/mol, preferably 17,000 to 25,000 g/mol, as determined by gel permeation chromatography using polystyrene standards and calculated for polycarbonate; or a combination thereof. In some aspects, the homopolycarbonate is one or more linear bisphenol A homopolycarbonates having a weight average molecular weight of 26,000 to 40,000 g/mol, preferably 27,000 to 35,000 g/mol, as determined by gel permeation chromatography using polystyrene standards and calculated for polycarbonate. In some aspects, the homopolycarbonate is a combination of a linear bisphenol A homopolycarbonate and a branched bisphenol A homopolycarbonate, each having a weight average molecular weight of 26,000 to 40,000 g/mol, preferably 27,000 to 35,000 g/mol, as determined by gel permeation chromatography using polystyrene standards and calculated for polycarbonate.

The polycarbonates of the polycarbonate composition may include post-consumer recycled polycarbonate ("PCR-PC"). PCR-PC is derived or recycled from polycarbonate as described herein. PCR-PC may be recovered from a source after consumption. In addition, PCR-PC may be recovered from post-consumer sources including, but not limited to, household appliance waste such as TV, air conditioner, washing machine, refrigerator, etc. Regardless of the source, the recovered polycarbonate component may be similar or even identical to the chemical composition of the corresponding original polycarbonate. In one example, the polycarbonate may be derived from an optical disc. In another example, the PCR-PC may be derived from a plastic bottle, such as a plastic beverage bottle. In contrast, virgin polycarbonate polymers refer to polycarbonate polymers produced directly from petrochemical feedstocks, such as natural gas or crude oil, which have never been used or processed before. One possible difference between the original polycarbonate component used in the composition of the invention and the PCR-PC is the presence of at least one impurity that is not present in the original material. For example, one or more additives conventionally used in the manufacture of impact modified thermoplastics may be present as impurities. Additional impurities may include processing residues such as lubricants, mold release agents, antistatic agents, stabilizers, light stabilizers, flame retardants, metals (e.g., iron, aluminum, and copper). In addition, impurities may include polyurethane particles that cannot be completely removed during the recovery process. In some aspects, the level of impurities in the PCR-PC is less than about 5 wt%, or in other aspects less than about 3 wt%, or in other aspects less than about 2 wt%. If present, the impurities do not significantly affect the properties of the compositions described herein.

Polycarbonates can be manufactured by processes such as interfacial polymerization and melt polymerization, which are known, and are described, for example, in WO 2013/175448 A1 and WO 2014/072923 A1. An end-capping agent (also referred to as a chain stopper agent or chain terminating agent) can be included during polymerization to provide end groups, for example monocyclic phenols such as phenol, p-cyanophenol, and C₁₋₂₂. alkyl-substituted phenols such as p-cumyl-phenol, resorcinol monobenzoate, and p-and tertiarybutyl phenol, monoethers of diphenols, such as p-methoxyphenol, monoesters of diphenols such as resorcinol monobenzoate, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used. Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 2.0 wt. %. Combinations comprising linear polycarbonates and branched polycarbonates can be used.

The homopolycarbonate can be linear, branched, or a combination of a linear homopolycarbonate and a branched homopolycarbonate. Branched polycarbonate blocks can be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. Combinations including linear polycarbonates and branched polycarbonates can be used.

In some aspects, a particular type of branching agent is used to create branched polycarbonate materials. These branched polycarbonate materials have statistically more than two end groups. The branching agent is added in an amount (relative to the bisphenol monomer) that is sufficient to achieve the desired branching content, that is, more than two end groups. The molecular weight of the polymer can become very high upon addition of the branching agent, and to avoid excess viscosity during polymerization, an increased amount of a chain stopper agent can be used, relative to the amount used when the particular branching agent is not present. The amount of chain stopper used is generally above 5 mole percent and less than 20 mole percent compared to the bisphenol monomer.

Such branching agents include aromatic triacyl halides, for example triacyl chlorides of formula (20) 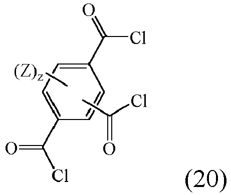 wherein Z is a halogen, C₁₋₃ alkyl, C₁₋₃ alkoxy, C₇₋₁₂ arylalkylene, C₇₋₁₂ alkylarylene, or nitro, and z is 0 to 3; a tri-substituted phenol of formula (21) 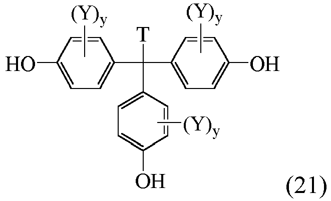 wherein T is a C₁₋₂₀ alkyl, C₁₋₂₀ alkoxy, C₇₋₁₂ arylalkyl, or C₇₋₁₂ alkylaryl, Y is a halogen, C₁₋₃ alkyl, C₁₋₃ alkoxy, C₇₋₁₂ arylalkyl, C₇₋₁₂ alkylaryl, or nitro, s is 0 to 4; or a compound of formula (22) (isatin-bis-phenol). 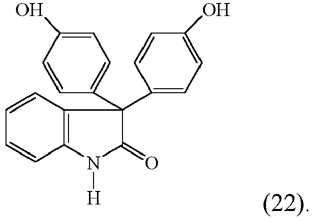 Examples of specific branching agents that are particularly effective in the compositions include trimellitic trichloride (TMTC), tris-p-hydroxyphenylethane (THPE), and isatin-bis-phenol.

The amount of the branching agents used in the manufacture of the polymer will depend on a number of considerations, for example the type of R¹ groups, the amount of chain stopper, e.g., cyanophenol, and the desired molecular weight of the polycarbonate. In general, the amount of branching agent is effective to provide 0.1 to 10 branching units per 100 R¹ units, preferably 0.5 to 8 branching units per 100 R¹ units, and more preferably 0.75 to 5 branching units per 100 R¹ units. For branching agents having formula (20), the branching agent is present in an amount to provide 0.1 to 10 triester branching units per 100 R¹ units, preferably 0.5 to 8, and more preferably 0.75 to 5 triester branching units per 100 R¹ units. For branching agents having formula (21), the branching agent is present in an amount effective to provide 0.1 to 10 triphenyl carbonate branching units per 100 R¹ units, preferably 0.5 to 8, and more preferably 2.5 to 3.5 triphenylcarbonate units per 100 R¹ units. In some aspects, a combination of two or more branching agents can be used. Alternatively, the branching agents can be added at a level of 0.05 to 2.0 wt.%.

In an aspect, the polycarbonate is a branched polycarbonate including units as described above; greater than or equal to 3 mole%, based on the total moles of the polycarbonate, of moieties derived from a branching agent; and end-capping groups derived from an end-capping agent having a pKa between 8.3 and 11. The branching agent can include trimellitic trichloride, 1,1,1-tris(4-hydroxyphenyl)ethane or a combination of trimellitic trichloride and 1,1,1-tris(4-hydroxyphenyl)ethane, and the end-capping agent is phenol or a phenol containing a substituent of cyano group, aliphatic groups, olefinic groups, aromatic groups, halogens, ester groups, ether groups, or a combination thereof. In a specific aspect, the end-capping agent is phenol, p-t-butylphenol, p-methoxyphenol, p-cyanophenol, p-cumylphenol, or a combination thereof.

The branching agent can be added from 0.01-1.0 mol%, or 0.2-1.0 mol%, or 0.2-0.5 mol%, or 0.2-0.4 mol%, each based on the total moles of monomers in the polycarbonate.

The homopolycarbonate(s) may be present, for example, from 10-95 wt%, 20-90 wt%, 30-90 wt%, 40-90 wt%, 50-90 wt%, 60-90 wt%, or 60-80 wt%, based on the total weight of the polycarbonate composition.

"Polycarbonates" include homopolycarbonates (wherein each R¹ in the polymer is the same) and copolymers including different R¹ moieties in the carbonate ("copolycarbonates"), and copolymers including carbonate units and other types of polymer units, such as ester units or siloxane units.

The polycarbonate compositions may include one or more poly(carbonate-siloxane)s, also referred to in the art as polycarbonate-polysiloxane copolymers. The polysiloxane blocks include repeating diorganosiloxane units as in formula (10) 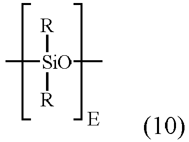 wherein each R is independently a C₁₋₁₃ monovalent organic group. For example, R may be a C₁₋₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkylene, C₇₋₁₃ arylalkylenoxy, C₇₋₁₃ alkylarylene, or C₇₋₁₃ alkylaryleneoxy. The foregoing groups may be fully or partially halogenated with fluorine, chlorine, bromine, or iodine, or a combination thereof. In an aspect, where a transparent poly(carbonate-siloxane) is desired, R is unsubstituted by halogen. Combinations of the foregoing R groups may be used in the same copolymer.

The value of E in formula (10) may vary widely depending on the type and relative amount of each component in the polycarbonate composition, the desired properties of the composition, and like considerations. Generally, E has an average value of 2 to 1,000, preferably 2 to 500, 2 to 200, or 2 to 125, 5 to 80, or 10 to 70. In an aspect, E has an average value of 10 to 80 or 10 to 40, and in still another aspect, E has an average value of 40 to 80, or 40 to 70. Where E is of a lower value, e.g., less than 40, it may be desirable to use a relatively larger amount of the poly(carbonate-siloxane) copolymer. Conversely, where E is of a higher value, e.g., greater than 40, a relatively lower amount of the poly(carbonate-siloxane) copolymer may be used. A combination of a first and a second (or more) poly(carbonate-siloxane) copolymers may be used, wherein the average value of E of the first copolymer is less than the average value of E of the second copolymer.

In an aspect, the polysiloxane blocks are of formula (11) 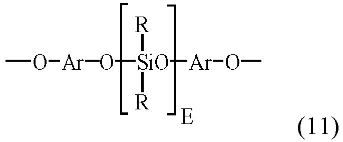 wherein E and R is each as defined if formula (10); each R may be the same or different, and is as defined above; and Ar may be the same or different, and is a substituted or unsubstituted C₆₋₃₀ arylene, wherein the bonds are directly connected to an aromatic moiety. Ar groups in formula (11) may be derived from a C₆₋₃₀ dihydroxyarylene compound, for example a dihydroxyarylene compound of formula (3) or (6). Dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane.

In another aspect, polysiloxane blocks are of formula (13) 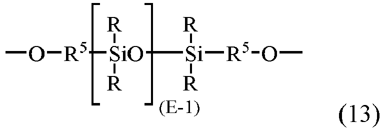 wherein Rand E are as described above, and each R⁵ is independently a divalent C₁₋₃₀ organic group, and wherein the polymerized polysiloxane unit is the reaction residue of its corresponding dihydroxy compound. In a specific aspect, the polysiloxane blocks are of formula (14): 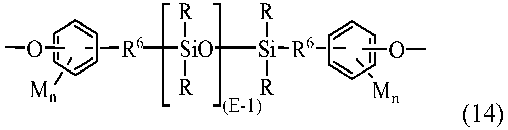 wherein Rand E are as defined above. R⁶ in formula (14) is a divalent C₂₋₈ aliphatic group. Each M in formula (14) may be the same or different, and may be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkylaryl, or C₇₋₁₂ alkylaryloxy, wherein each n is independently 0, 1, 2, 3, or 4.

In an aspect, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another aspect, R is methyl, or a combination of methyl and trifluoropropyl, or a combination of methyl and phenyl. In still another aspect, R is methyl, M is methoxy, n is one, and R⁶ is a divalent C₁₋₃ aliphatic group. Specific polysiloxane blocks are of the formula 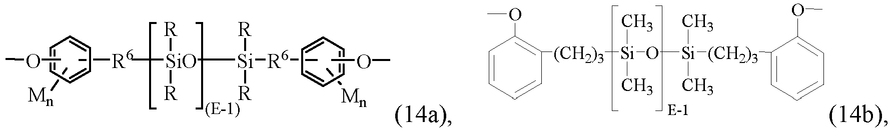 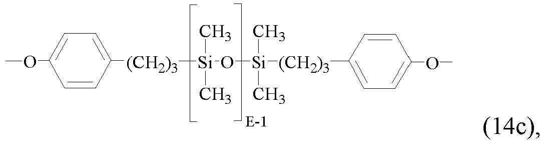 or a combination thereof, wherein E has an average value of 2 to 200, 2 to 125, 5 to 125, 5 to 100, 5 to 50, 20 to 80, or 5 to 20.

Blocks of formula (14) may be derived from the corresponding dihydroxy polysiloxane, which in turn may be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane) copolymers may then be manufactured, for example, by the synthetic procedure of European Patent Application Publication No. 0 524 731 A1 of Hoover, page 5, Preparation 2.

Transparent poly(carbonate-siloxane) copolymers include carbonate units (1) derived from bisphenol A, and repeating siloxane units (14a), (14b), (14c), or a combination thereof (preferably of formula 14a), wherein E has an average value of 4 to 50, 4 to 15, preferably 5 to 15, more preferably 6 to 15, and still more preferably 7 to 10. The transparent copolymers may be manufactured using one or both of the tube reactor processes described in U.S. Patent Application No. 2004/0039145A1 or the process described in U.S. Patent No. 6,723,864 may be used to synthesize the poly(carbonate-siloxane) copolymers.

The poly(carbonate-siloxane) copolymers may include 50 to 99 wt% of carbonate units and 1 to 50 wt% siloxane units. Within this range, the poly(carbonate-siloxane) copolymer may include 70 to 98 wt%, more preferably 75 to 97 wt% of carbonate units and 2 to 30 wt%, more preferably 3 to 25 wt% siloxane units.

In an aspect, a blend is used, in particular a blend of a bisphenol A homopolycarbonate and a poly(carbonate-siloxane) block copolymer of bisphenol A blocks and eugenol capped polydimethylsiloxane blocks, of the formula 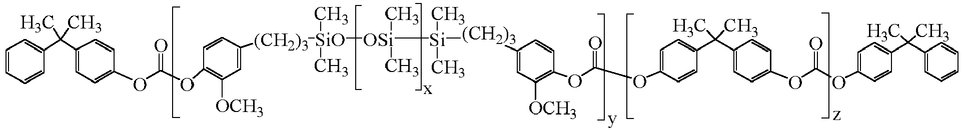 wherein x is 1 to 200, preferably 5 to 85, preferably 10 to 70, preferably 15 to 65, and more preferably 40 to 60; x is 1 to 500, or 10 to 200, and z is 1 to 1000, or 10 to 800. In an aspect, x is 1 to 200, y is 1 to 90 and z is 1 to 600, and in another aspect, x is 30 to 50, y is 10 to 30 and z is 45 to 600. The polysiloxane blocks may be randomly distributed or controlled distributed among the polycarbonate blocks.

The polycarbonate-siloxane copolymer can have a siloxane content of 30 to 70 wt%, based on the total weight of the polycarbonate-siloxane copolymer. Within this range, the polycarbonate-siloxane copolymer can have a siloxane content of greater than 30 to 70 wt%, or 35 to 70 wt%, or 35 to 65 wt%. As used herein, "siloxane content" of a polycarbonate-siloxane refers to the content of siloxane units based on the total weight of the polysiloxane-polycarbonate copolymer.

Poly(carbonate-siloxane)s may have a weight average molecular weight of 2,000 to 100,000 g/mol, preferably 5,000 to 50,000 g/mol as measured by gel permeation chromatography using a crosslinked styrene-divinyl benzene column, at a sample concentration of 1 milligram per milliliter, using polystyrene standards and calculated for polycarbonate. As used herein, "using polystyrene standards and calculated for polycarbonate" refers to measurement of the retention time by GPC, fitting the retention time value to a curve for polystyrene and calculating the molecular weight for polycarbonate. The polycarbonate-siloxane copolymer can have a weight average molecular weight of 17,000 to 50,000 g/mol. Within this range, the weight average molecular weight can be 17,000 to 45,000 g/mol, or 20,000 to 45,000 g/mol, or 30,000 to 45,000 g/mol, or 32,000 to 36,000 g/mol, or 30,000 to 45,000 g/mol, or 32,000 to 45,000 g/mol, or 35,000 to 45,000 g/mol, or 35,000 to 40,000 g/mol, or 32,000 to 40,000 g/mol. In an aspect, the polycarbonate-siloxane copolymer can have a weight average molecular weight of 26,000 to 45,000 g/mol, or 30,000 to 45,000 g/mol, or 35,000 to 40,000 g/mol. The weight average molecular weight can be measured by gel permeation chromatography using a crosslinked styrene-divinyl benzene column, at a sample concentration of 1 milligram per milliliter, and as calibrated with bisphenol A polycarbonate standards.

The poly(carbonate-siloxane)s may have a melt volume flow rate, measured at 300°C/1.2 kg, of 0.1 to 50 cubic centimeters per 10 minutes (cc/10 min), preferably 2 to 30 cc/10 min. Combinations of the poly(carbonate-siloxane)s of different flow properties may be used to achieve the overall desired flow property.

One or more poly(carbonate-siloxane) copolymers may be included in the polycarbonate compositions. The polycarbonate compositions may include a polycarbonate-siloxane) copolymer including 30 to 70 wt% siloxane repeating units, based on the total weight of the poly(carbonate-siloxane) copolymer. Within this range, the poly(carbonate-siloxane) may include 35 to 70 wt%, or 35 to 65 wt% siloxane repeating units. As used herein, "siloxane repeating units" of a poly(carbonate-siloxane) refers to the content of siloxane units based on the total weight of the poly(carbonate-siloxane). The polycarbonate compositions may include a poly(carbonate-siloxane) copolymer 10 to less than 30 wt% siloxane repeating units, based on the total weight of the poly(carbonate-siloxane). Within this range, the poly(carbonate-siloxane) copolymer may have a siloxane repeating units of 15 to 25 wt% siloxane repeating units. The polycarbonate compositions may include a poly(carbonate-siloxane) copolymer less than 10 wt% siloxane repeating units, based on the total weight of the poly(carbonate-siloxane). Within this range, the poly(carbonate-siloxane) copolymer may include 4 to 8 wt% siloxane repeating units. The polycarbonate compositions may include two or more of the foregoing.

The polycarbonate siloxane) copolymers may be present in an amount effective to provide 0.5 to 10 wt%, 1 to 5 wt%, 1 to 4 wt%, 1.5 to 3.5 wt%, 3 wt% or less, 1 to 3 wt%, or 2-3 wt% siloxane repeating units, each based on the total composition.

In addition to the homopolycarbonate and the optional poly(carbonate siloxane), the polycarbonate compositions include a polycarbonate including repeating units derived from a monomer including a pendant ester group. The polycarbonate having pendant ester groups includes a repeating unit derived from a bisphenol and a repeating unit derived from a monomer including the pendant ester group. The monomer including the pendant ester group has the structure of Formula (A) or Formula (B):

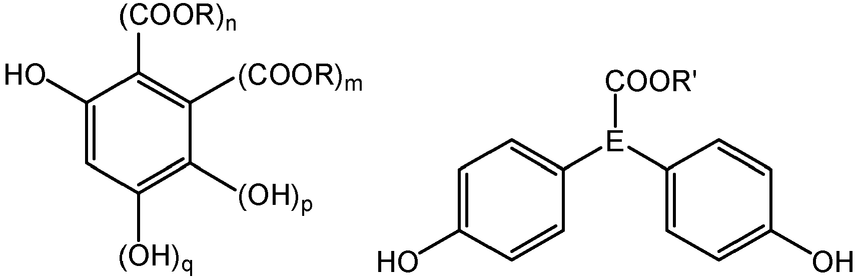

In Formula (A) and Formula (B), each occurrence of R and R' is independently C₂-C₁₅ alkyl; each of m, n, p, and q is independently 0 or 1; m + n = 1; p + q = 1; and E is C₁-C₁₅ alkyl. In some aspects, R is a linear or a branched C₂-C₁₅ alkyl group, preferably a branched C₂-C₁₅ alkyl group. In some aspects, R is ethyl, isopropyl, sec-butyl, tert-butyl, or isopentyl, preferably ethyl or isopropyl, more preferably isopropyl. The a polycarbonate including repeating units derived from a monomer including a pendant ester group may include repeating units derived from Formula (A), repeating units of Formula (B), or a combination thereof. The pendant ester groups in the polycarbonate may be the same or different. The polycarbonate may be derived from Formula (A), Formula (B), or a combination thereof and the pendant ester groups may be the same. The polycarbonate may be derived from Formula (A), Formula (B), or a combination thereof and the pendant ester groups may be different. In some aspects, the a polycarbonate including repeating units derived from a monomer including a pendant ester group may include bisphenol A repeating units. In some aspects, the a polycarbonate including repeating units derived from a monomer including a pendant ester group may include bisphenol A repeating units and repeating units derived from a monomer of Formula (A), a monomer of Formula (B), or a combination thereof, wherein the pendant ester groups include ethyl esters, isopropyl esters, or a combination thereof. The polycarbonate(s) including repeating units derived from a monomer including a pendant ester group may include a polysiloxane block as described above. The polycarbonate including repeating units derived from a monomer including a pendant ester group may include 1-99 mol%, 1-90 mol%, 1-75 mol%, 1-60 mol%, 1-50 mol%, 1-40 mol%, 1-30 mol%, 1-25 mol%, 1-20 mol%, 1-15 mol%, 1-10 mol%, or 1-5 mol% of ester repeating units, each based on the total moles of monomers in the polycarbonate. The polycarbonate including repeating units derived from a monomer including a pendant ester group may be present in the composition in an amount effective to provide 0.1-5 mol%, 0.1-4.5 mol%, 0.1-4.0 mol%, 0.1-3.5 mol%,0.1-3.0 mol%, 0.1-2.5 mol%, 0.1-2.0 mol%, 0.1 to 1.0 mol%, 2.0-4.0 mol%, 2.5-4.0 mol%, or 2.0-3.5 mol% ester repeating units, each based on the total monomers in the composition.

Monomers of Formulas (A) and (B) can be prepared according to U.S. Pat. Nos. 4,999,408 and 4,960,863, which are fully incorporated by reference herein.

The polycarbonate including repeating units derived from a monomer including a pendant ester group can be branched. This is accomplished by including a branching agent during the reaction that forms the polycarbonate including repeating units derived from a monomer including a pendant ester group, similar to the branched homopolycarbonates discussed above. The branching agent can be added from 0.01-1.0 mol%, or 0.2-1.0 mol%, or 0.2-0.5 mol%, or 0.2-0.4 mol%, each based on the total moles of monomers in the polycarbonate.

The polycarbonate including repeating units derived from a monomer including a pendant ester group may be oligomeric or polymeric, with a weight average molecular weight ranging from 1,000 to 150,000 g/mol, each measured by GPC using polystyrene standards and calculated for polycarbonate. Within this range, in some aspects, the polycarbonate including repeating units derived from a monomer including a pendant ester group may have a Mw of 5,000 to less than 26,000 g/mol, or 5,000-20,000 g/mol, 5,000-15,000 g/mol, or 10,000-15,000 g/mol. In some aspects, the polycarbonate including repeating units derived from a monomer including a pendant ester group may have a Mw of 26,000-50,000 g/mol or 26,000-45,000 g/mol. In some aspects, the polycarbonate including repeating units derived from a monomer including a pendant ester group may have a Mw of 50,000-150,000 g/mol, 75,000-150,000 g/mol, or 100,000-150,000 g/mol.

Copolymers of this type are "free" nitrile-containing aromatic copolymers that are not grafted onto another polymeric chain, such as the nitrile-containing aromatic copolymers present in the elastomeric phase of impact modifiers. Nitrile-containing aromatic copolymers include ABS (derived from acrylonitrile, butadiene, and styrene), SAN (derived from styrene and acrylonitrile), or a combination thereof. In addition to the ABS and/or SAN copolymers, the polycarbonate compositions may include nitrile-containing aromatic copolymers different from ABS and SAN. Generally, nitrile-containing aromatic copolymers include structural units derived from at least one ethylenically unsaturated nitrile and at least one vinyl aromatic compound. The vinyl aromatic compounds can include monomers of formula (18): 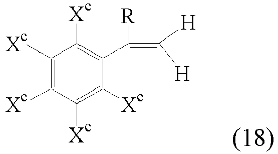 wherein each X^{c} is independently hydrogen, C₁₋₁₂ alkyl, C₃₋₁₂ cycloalkyl, C₆₋₁₂ aryl, C₇₋₁₂ aralkyl, C₇₋₁₂ alkylaryl, C₁₋₁₂ alkoxy, C₃₋₁₂ cycloalkoxy, C₆₋₁₂ aryloxy, chloro, bromo, or hydroxy, and R is hydrogen, C₁₋₅ alkyl, bromo, or chloro. monovinylaromatic monomers that can be used include styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, and the like, or a combination thereof.

The ethylenically unsaturated nitrile can be of formula (19) 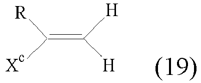 wherein R is hydrogen, C₁₋₅ alkyl, bromo, or chloro, and X^{c} is cyano. In addition to the at least one ethylenically unsaturated nitrile and at least one vinyl aromatic compound, the nitrile-containing aromatic copolymer may be derived from an ethylenically unsaturated monomer of formula (19) wherein R is hydrogen, C₁₋₅ alkyl, bromo, or chloro and X^{c} is C₁₋₁₂ alkoxycarbonyl, C₁₋₁₂ aryloxycarbonyl, hydroxy carbonyl, or the like. Examples of monomers of formula (19) include acrylonitrile, methacrylonitrile, alpha-chloroacrylonitrile, beta-chloroacrylonitrile, alpha-bromoacrylonitrile, acrylic acid, methyl (meth)acrylate, ethyl (meth)acrylate, n-butyl (meth)acrylate, t-butyl (meth)acrylate, n-propyl (meth)acrylate, isopropyl (meth)acrylate, 2-ethylhexyl (meth)acrylate, and the like, and a combination thereof. Monomers such as n-butyl acrylate, ethyl acrylate, and 2-ethylhexyl acrylate are commonly used as monomers copolymerizable with the conjugated diene monomer. Combinations of the foregoing monovinyl monomers and monovinylaromatic monomers can also be used.

The nitrile-containing aromatic copolymers may further include blocks derived from conjugated diene monomers of formula (17) 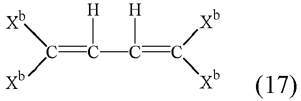 wherein each X^{b} is independently hydrogen, C₁₋₅ alkyl, or the like. Examples of conjugated diene monomers that can be used are butadiene, isoprene, 1,3-heptadiene, methyl-1,3-pentadiene, 2,3-dimethyl-1,3-butadiene, 2-ethyl-1,3-pentadiene; 1,3- and 2,4-hexadienes, and the like, as well as a combination thereof. Specific conjugated diene blocks include polybutadiene and polyisoprene.

Suitable nitrile-containing aromatic copolymers in addition to SAN and ABS include α-methylstyrene-acrylonitrile copolymers, acrylonitrile-styrene-methacrylic acid ester terpolymers, acrylonitrile-ethyl acrylate-styrene copolymers and rubber-modified acrylonitrile-styrene-butyl acrylate polymers.

The weight average molecular weight of the nitrile containing copolymer can be 30,000 to 150,000 g/mol, specifically 40,000 to 100,000 g/mol, more specifically 50,000 to 90,000 g/mol, as determined by GPC relative to polystyrene standards. The nitrile containing copolymers including ABS and/or SAN can include various proportions of vinyl aromatic compound to ethylenically unsaturated nitrile. For example, nitrile containing copolymer can include 75 wt% vinyl aromatic compound and 25 wt% ethylenically unsaturated nitrile based on the total weight of the nitrile containing copolymer. In some aspects, the nitrile containing copolymer may include 5 wt% to 30 wt% ethylenically unsaturated nitrile by weight of the nitrile containing copolymer, for example, 10 wt% to 25 wt% ethylenically unsaturated nitrile, or 16 wt% to 28 wt% ethylenically unsaturated nitrile. In a particular aspect, nitrile containing copolymer includes 75 wt% vinyl aromatic compound and 25 wt% ethylenically unsaturated nitrile based on the total weight of the nitrile containing copolymer. In some aspects, nitrile containing copolymer may include not more than 28 wt% ethylenically unsaturated nitrile, or not more than 25 wt% acrylonitrile.

The polycarbonate compositions include up to 15 wt%, up to 12 wt%, up to 10 wt%, 2-15 wt%, 2-12 wt%, or 2-10 wt% of the nitrile-containing aromatic copolymers. When ABS and SAN are both present, they can be present in any ratio including 1:9 to 9:1, 1:5 to 5:1, 1:4 to 4:1, 1:3 to 3:1, 1:2 to 2:1, or about 1:1.

The polycarbonate compositions include non-fluorinated flame retardant. In an exemplary aspect, the polycarbonate compositions avoid the use of fluorinated flame retardants such as Rimar salt and brominated flame retardants such a brominated polycarbonate copolymers. Inorganic non-halogenated flame retardants may be used, for example salts of aromatic sulfonates such as sodium benzene sulfonate, sodium toluene sulfonate (NATS), and the like, salts of aromatic sulfone sulfonates such as potassium diphenylsulfone sulfonate (KSS), and the like; salts formed by reacting for example an alkali metal or alkaline earth metal (e.g., lithium, sodium, potassium, magnesium, calcium and barium salts) and an inorganic acid complex salt, for example, an oxo-anion (e.g., alkali metal and alkaline-earth metal salts of carbonic acid, such as Na₂CO₃, K₂CO₃, MgCO₃, CaCO₃, and BaCO₃, KSS and NATS, alone or in combination with other non-halogenated flame retardants, are particularly useful. Exemplary amounts of an aromatic sulfone sulfonate salt may be 0.01 to 1.0 wt%, or 0.1 to 0.6 wt%, based on the total weight of the polycarbonate composition.

The non-fluorinated flame retardant may include an aromatic organophosphorus compound. In the aromatic organophosphorus compounds that have at least one organic aromatic group, the aromatic group may be a substituted or unsubstituted C₃₋₃₀ group containing one or more of a monocyclic or polycyclic aromatic moiety (which may optionally contain with up to three heteroatoms (N, O, P, S, or Si)) and optionally further containing one or more nonaromatic moieties, for example alkyl, alkenyl, alkynyl, or cycloalkyl. The aromatic moiety of the aromatic group may be directly bonded to the phosphorus-containing group, or bonded via another moiety, for example an alkylene group. The aromatic moiety of the aromatic group may be directly bonded to the phosphorus-containing group, or bonded via another moiety, for example an alkylene group. In an aspect the aromatic group is the same as an aromatic group of the polycarbonate backbone, such as a bisphenol group (e.g., bisphenol A), a monoarylene group (e.g., a 1,3-phenylene or a 1,4-phenylene), or a combination including at least one of the foregoing.

The phosphorus-containing group may be a phosphate (P(=O)(OR)₃), phosphite (P(OR)₃), phosphonate (RP(=O)(OR)₂), phosphinate (R₂P(=O)(OR)), phosphine oxide (R₃P(=O)), or phosphine (R₃P), wherein each R in the foregoing phosphorus-containing groups may be the same or different, provided that at least one R is an aromatic group. A combination of different phosphorus-containing groups may be used. The aromatic group may be directly or indirectly bonded to the phosphorus, or to an oxygen of the phosphorus-containing group (i.e., an ester).

The non-fluorinated flame retardant may include an oxaphosphorinoxide of the Formula (23) below.

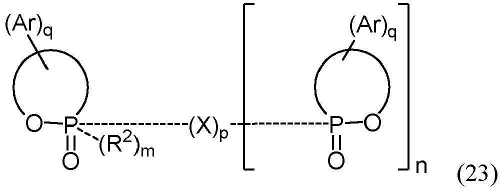

In Formula (23), the phosphorus atom and one oxygen atom are part of a cyclic structure, for example, a five or six membered ring and q is at least two. Each Ar is independently C₆₋₁₈ aryl, preferably benzene, which is optionally substituted with a C₁₋₁₈ hydrocarbyl group, or a C₁₋₁₈ hydrocarbyloxy group (e.g., -O-hydrocarbyl). When n and p are each 0 and m is 1 ("mono-DOPO" type compounds), then R² is hydrogen, C₁-C₁₈ alkyl, C₃₋₁₀ cycloalkyl, (C₁₋₆ alkyl)C₃₋₁₀ cycloalkyl, C₆₋₁₈ aryl, (C₁₋₆ alkyl)C₆₋₁₈ aryl, C₃₋₁₂ heteroaryl, or (C₁₋₆ alkyl)C₃₋₁₂ heteroaryl. In the foregoing groups at least one hydrogen atom of these groups may be substituted with a group having an N, S, O, or F atom. As used herein, "(C₁₋₆ alkyl)C₃₋₁₀ cycloalkyl" refers to a cycloalkyl group attached to an alkylene group, "(C₁₋₆ alkyl)C₆₋₁₈ aryl" refers to an aryl group attached to an alkylene group, and "(C₁₋₆ alkyl)C₃₋₁₂ heteroaryl" refers to a heteroaryl group attached to an alkylene group. In any of the alkyl or cycloalkyl groups of R², any carbon-carbon single bond is optionally replaced by a carbon-carbon double or triple bond, and any methylene is optionally replaced by O, S, S(=O), C(=O), P(=O), or NR¹⁰, wherein R¹⁰ is hydrogen or C₁₋₆ alkyl, and any methylene is optionally substituted with a group having an N, S, O, or F atom.

In Formula (23), when n and p are each 1 or more and m is 0 ("Di-DOPO" type compounds), then X is C₁-C₁₈ alkylidene, C₃₋₁₀ cycloalkylidene, C₆₋₁₈ arylene, C₃₋₁₂ heteroarylene, a group derived from Formula (3), or a group represented by -L¹-X'-L²-. The L¹ and L² linker groups are each independently a single bond, C₁-C₁₈ alkylidene, or a C₃₋₁₀ cycloalkylidene, where any carbon-carbon single bond is optionally replaced by a carbon-carbon double or triple bond, and any methylene is optionally replaced by O, S, S(=O), C(=O), P(=O), or NR¹⁰, wherein R¹⁰ is hydrogen or C₁₋₆ alkyl, and any methylene is optionally substituted with a group having an N, S, O, or F atom. X' is C₁-C₁₈ alkylidene, C₃₋₁₀ cycloalkylidene, C₆₋₁₈ arylene, C₃₋₁₂ heteroarylene, or a group derived from Formula (3).

Specific examples of an oxaphosphorinoxide include 9,10-dihydro-9-oxo-10-phosphaphenanthrene-10-oxide (23a, "DOPO"), commercially available as from SANKO CO., LTD., under the trade name Sanko-HCA, 3-(6-oxidodibenzo[c,e][1,2]oxaphosphinin-6-yl)propanamide (23b, "AAM-DOPO"), and 6-[(1-oxido-2,6,7-trioxa-1-phosphabicyclo[2.2.2.]oct-4-yl)methoxy-6-oxide (23c, "DOPO-PEPA").

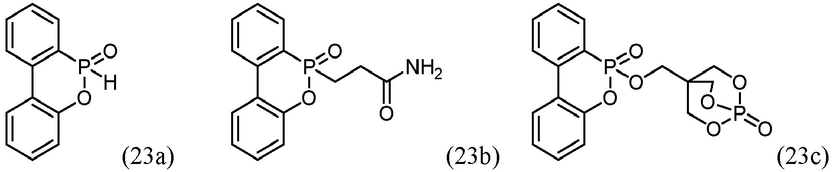

A specific formula for a Di-DOPO compound is Formula (24). 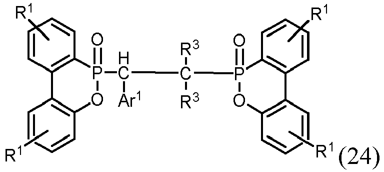 wherein Ar¹ is C₃₋₁₈ heteroaryl or C₆₋₁₈ aryl, each instance of R³ is independently hydrogen, C₁₋₁₈ alkyl, C₃₋₁₈ heteroaryl or C₆₋₁₈ aryl, each instance of R¹ is independently C₁₋₁₈ alkyl, C₃₋₁₈ heteroaryl or C₆₋₁₈ aryl, and any hydrogen atom on an aryl or heteroaryl ring may be optionally substituted with a C₁₋₁₈ alkyl group. An exemplary Di-DOPO compound is HTP-6123G, commercially available from GUIZHOU YUANYI MINING GROUP CO.

In an aspect, the non-fluorinated flame retardant is a monomeric phosphate. Representative monomeric aromatic phosphates are of the formula (GO)₃P=O, wherein each G is independently an alkyl, cycloalkyl, aryl, alkylarylene, or arylalkylene group having up to 30 carbon atoms, provided that at least one G is an aromatic group. Two of the G groups may be joined together to provide a cyclic group. In some aspects G corresponds to a monomer used to form the polycarbonate, e.g., resorcinol. Exemplary phosphates include phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, and the like. A specific aromatic phosphate is one in which each G is aromatic, for example, triphenyl phosphate, tricresyl phosphate, isopropylated triphenyl phosphate, and the like.

Di- or polyfunctional aromatic organophosphorus compounds are also useful, for example, compounds of the formulas 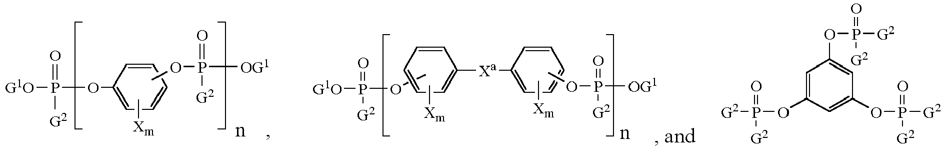 wherein each G¹ is independently a C₁₋₃₀ hydrocarbyl; each G² is independently a C₁₋₃₀ hydrocarbyl or hydrocarbyloxy; X^{a} is as defined in formula (3) or formula (4); each X is independently a bromine or chlorine; m is 0 to 4, and n is 1 to 30. In a specific aspect, X^{a} is a single bond, methylene, isopropylidene, or 3,3,5-trimethylcyclohexylidene.

Specific aromatic organophosphorus compounds are inclusive of acid esters of formula (9) 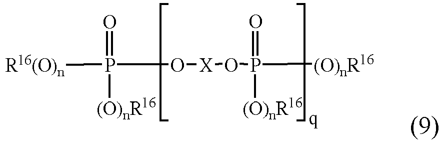 wherein each R¹⁶ is independently C₁₋₈ alkyl, C₅₋₆ cycloalkyl, C₆₋₂₀ aryl, or C₇₋₁₂ arylalkylene, each optionally substituted by C₁₋₁₂ alkyl, specifically by C₁₋₄ alkyl and X is a mono- or poly-nuclear aromatic C₆₋₃₀ moiety or a linear or branched C₂₋₃₀ aliphatic radical, which may be OH-substituted and may contain up to 8 ether bonds, provided that at least one R¹⁶ or X is an aromatic group; each n is independently 0 or 1; and q is from 0.5 to 30. In some aspects each R¹⁶ is independently C₁₋₄ alkyl, naphthyl, phenyl(C₁₋₄)alkylene, aryl groups optionally substituted by C₁₋₄ alkyl; each X is a mono- or poly-nuclear aromatic C₆₋₃₀ moiety, each n is 1; and q is from 0.5 to 30. In some aspects each R¹⁶ is aromatic, e.g., phenyl; each X is a mono- or poly-nuclear aromatic C₆₋₃₀ moiety, including a moiety derived from formula (2); n is one; and q is from 0.8 to 15. In other aspects, each R¹⁶ is phenyl; X is cresyl, xylenyl, propylphenyl, or butylphenyl, one of the following divalent groups 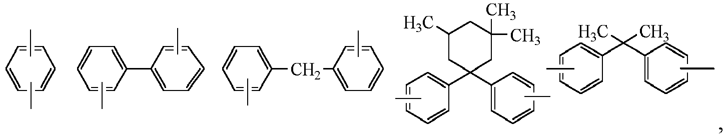 or a combination including one or more of the foregoing; n is 1; and q is from 1 to 5, or from 1 to 2. In some aspects at least one R¹⁶ or X corresponds to a monomer used to form the polycarbonate, e.g., bisphenol A, resorcinol, or the like. Aromatic organophosphorus compounds of this type include the bis(diphenyl) phosphate of hydroquinone, resorcinol bis(diphenyl phosphate) (RDP), and bisphenol A bis(diphenyl) phosphate (BPADP), and their oligomeric and polymeric counterparts.

The non-fluorinated flame retardant containing a phosphorus-nitrogen bond may be a phosphazene, phosphonitrilic chloride, phosphorus ester amide, phosphoric acid amide, phosphonic acid amide, phosphinic acid amide, or tris(aziridinyl) phosphine oxide. These flame-retardant additives are commercially available. In an aspect, the non-fluorinated flame retardant containing a phosphorus-nitrogen bond is a phosphazene or cyclic phosphazene of the formulas 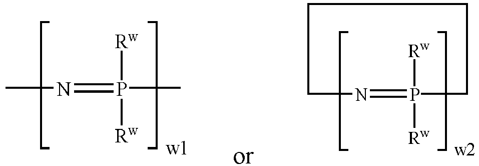 wherein w1 is 3 to 10,000; w2 is 3 to 25, or 3 to 7; and each R^{w} is independently a C₁₋₁₂ alkyl, alkenyl, alkoxy, aryl, aryloxy, or polyoxyalkylene group. In the foregoing groups at least one hydrogen atom of these groups may be substituted with a group having an N, S, O, or F atom, or an amino group. For example, each R^{w} may be a substituted or unsubstituted phenoxy, an amino, or a polyoxyalkylene group. Any given R^{w} may further be a crosslink to another phosphazene group. Exemplary crosslinks include bisphenol groups, for example bisphenol A groups. Examples include phenoxy cyclotriphosphazene, octaphenoxy cyclotetraphosphazene decaphenoxy cyclopentaphosphazene, and the like. In an aspect, the phosphazene has a structure represented by the formula

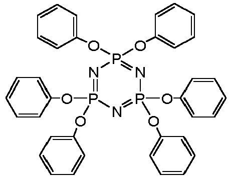

Commercially available phenoxyphosphazenes having the aforementioned structures are LY202 manufactured and distributed by Lanyin Chemical Co., Ltd, FP-110 manufactured and distributed by Fushimi Pharmaceutical Co., Ltd, and SPB-100 manufactured and distributed by Otsuka Chemical Co., Ltd.

When the non-fluorinated flame retardant includes an organophosphorus flame retardant, organophosphorus flame retardant may be present in an amount effective to provide 0.5-2.0 wt%, 0.5-1.8 wt%, 0.5-1.5 wt%, 0.7-2.0 wt%, 0.7-1.8 wt%, 0.7-1.5 wt%, 0.7-1.3 wt%, 0.7-1.2 wt%, or 0.8-1.2 wt% phosphorus, each based on the total weight of the composition.

The polycarbonate compositions minimize or eliminate conventional anti-drip agents, in particular fluorinated anti-drip agents. Anti-drip agents include, for example, a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. TSAN includes 50 wt% PTFE and 50 wt% SAN, based on the total weight of the encapsulated fluoropolymer. The SAN can include, for example, 75 wt% styrene and 25 wt% acrylonitrile based on the total weight of the copolymer. In some aspects, the fluorinated anti-drip agent is present in an amount effective to provide 0.15 wt% or less fluorine to the total composition. In some aspects, a fluorinated anti-drip agent is excluded from the polycarbonate compositions.

The polycarbonate composition may include various additives ordinarily incorporated into polymer compositions of this type, with the proviso that the additive(s) are selected so as to not significantly adversely affect the desired properties of the polycarbonate composition, in particular flame resistance, impact resistance and the melt volume rate. Such additives may be mixed at a suitable time during the mixing of the components for forming the composition. Additives include antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, and radiation stabilizers. A combination of additives may be used, for example a combination of a heat stabilizer, mold release agent, and ultraviolet light stabilizer. In general, the additives are used in the amounts generally known to be effective. For example, the total amount of the additives (other than any impact modifier, filler, or reinforcing agents) may be 0.01-10 wt%, 0.01-5 wt%, 0.01-2 wt%, or 0.01-1 wt%, each based on the total weight of the polycarbonate composition.

In some aspects, the polycarbonate compositions include a linear homopolycarbonate and a polycarbonate including bisphenol A carbonate units and repeating units derived from a monomer including a pendant ester group, a nitrile-containing aromatic copolymer including acrylonitrile butadiene styrene copolymer, styrene acrylonitrile copolymer, or a combination thereof, and an a non-fluorinated flame retardant. In certain aspects, the polycarbonate including bisphenol A carbonate units and repeating units derived from a monomer including a pendant ester group is present in an amount effective to provide 0.2-5.0 mol%, 0.2-2.0 mol%, 0.2-1.0 mol%, 0.3-1.0 mol%, 0.35-1.0 mol%, of 0.4-1.0 mol% ester repeating units, each based on the total monomers in the composition.

In some aspects, the polycarbonate compositions include a linear homopolycarbonate and a polycarbonate including bisphenol A carbonate units and repeating units derived from a monomer including a pendant ester group, a polycarbonate siloxane) including 10 to less than 30 wt% siloxane repeating units, polycarbonate siloxane) including 30 to 70 wt% siloxane repeating units, or a combination thereof, a nitrile-containing aromatic copolymer including acrylonitrile butadiene styrene copolymer, styrene acrylonitrile copolymer, or a combination thereof, and an a non-fluorinated flame retardant. In certain aspects, the polycarbonate including bisphenol A carbonate units and repeating units derived from a monomer including a pendant ester group is present in an amount effective to provide 0.2-5.0 mol%, 0.2-2.0 mol%, 0.2-1.0 mol%, 0.3-1.0 mol%, 0.35-1.0 mol%, of 0.4-1.0 mol% ester repeating units, each based on the total monomers in the composition.

In some aspects, the polycarbonate compositions include a combination of a linear homopolycarbonate and a branched homopolycarbonate, and a polycarbonate including bisphenol A carbonate units and repeating units derived from a monomer including a pendant ester group, a nitrile-containing aromatic copolymer including acrylonitrile butadiene styrene copolymer, styrene acrylonitrile copolymer, or a combination thereof, and an a non-fluorinated flame retardant. In certain aspects, the polycarbonate including bisphenol A carbonate units and repeating units derived from a monomer including a pendant ester group is present in an amount effective to provide 1.0-5.0 mol%, 1.5-5.0 mol%, 2.0-5.0 mol%, or 2.0-4.0 mol% of ester repeating units, each based on the total monomers in the composition.

In some aspects, the polycarbonate compositions include a combination of a linear homopolycarbonate and a branched homopolycarbonate, and a polycarbonate including bisphenol A carbonate units and repeating units derived from a monomer including a pendant ester group, a polycarbonate siloxane) including 10 to less than 30 wt% siloxane repeating units, polycarbonate siloxane) including 30 to 70 wt% siloxane repeating units, or a combination thereof, a nitrile-containing aromatic copolymer including acrylonitrile butadiene styrene copolymer, styrene acrylonitrile copolymer, or a combination thereof, and an a non-fluorinated flame retardant. In certain aspects, the polycarbonate including bisphenol A carbonate units and repeating units derived from a monomer including a pendant ester group is present in an amount effective to provide 1.0-5.0 mol%, 1.5-5.0 mol%, 2.0-5.0 mol%, or 2.0-4.0 of ester repeating units, each based on the total monomers in the composition.

The polycarbonate compositions may have ultra-low halogen content. As used herein, "ultra-low chlorine and/or bromine content" refers to materials produced without the intentional addition of chlorine or bromine or chlorine or bromine containing materials. It is understood however that in facilities that process multiple products a certain amount of cross contamination may occur resulting in bromine or chlorine levels typically on the parts per million by weight scale. With this understanding it may be readily appreciated that "ultra-low chlorine or bromine content" may be defined as having a bromine or chlorine content of less than or equal to 100 parts per million by weight (ppm), less than or equal to 75 ppm, or less than or equal to 50 ppm. In some aspects, "ultra-low chlorine and bromine content" means a total bromine and chlorine content of less than or equal to 100 parts per million by weight, or less than or equal to 75 ppm, or less than or equal to 50 ppm. When this definition is applied to the non-halogenated flame retardant it is based on the total weight of the non-halogenated flame retardant. When this definition is applied to the polycarbonate composition it is based on the total parts by weight of the polycarbonate composition.

In another aspect, the polycarbonate composition may have an ultra-low chlorine, bromine, or fluorine content. As used herein, "ultra-low chlorine, bromine, or fluorine content" is defined as having a bromine, chlorine, or fluorine content of less than or equal to 100 ppm, less than or equal to 75 ppm, or less than or equal to 50 ppm, based on the total parts by weight of the composition. Preferably, the polycarbonate composition has a combined bromine, chlorine, and fluorine content of less than or equal to 100 ppm, less than or equal to 75 ppm, or less than or equal to 50 ppm, based on the total parts by weight of the composition.

The polycarbonate compositions may be manufactured by various methods. For example, powdered polycarbonates, non-halogenated flame retardant, and/or optional components are first blended, optionally with fillers in a HENSCHEL-Mixer high speed mixer. Other low shear processes, including but not limited to hand mixing, may also accomplish this blending. The blend is then fed into the throat of a twin-screw extruder via a hopper. Alternatively, at least one of the components may be incorporated into the composition by feeding directly into the extruder at the throat or downstream through a sidestuffer. Additives may also be compounded into a masterbatch with a desired polymeric polymer and fed into the extruder. The extruder is generally operated at a temperature higher than that necessary to cause the composition to flow. The extrudate is immediately quenched in a water bath and pelletized. The pellets so prepared may be one-fourth inch long or less as desired. Such pellets may be used for subsequent molding, shaping, or forming.

A sample of the polycarbonate composition may have a low-temperature impact resistance The polycarbonate compositions can have a Notched Izod Impact (NII) of at least 25 kJ/m², measured at 23°C using 3mm in accordance with ISO 180/1A.

A sample of the polycarbonate composition may have a low-temperature impact resistance The polycarbonate compositions can have a NII of at least 10 kJ/m², measured at - 30°C using 3 mm in accordance with ISO 180/1.

A sample of the polycarbonate composition may have a flame test rating of V-0, as measured according to UL-94 at a thickness of 1.5 millimeter or less, such as, for example, 1.2 millimeter, 1.0 millimeter, 0.75 millimeter, and 0.6 millimeter.

Shaped, formed, or molded articles including the polycarbonate compositions are also provided. The polycarbonate compositions may be molded into useful shaped articles by a variety of methods, such as injection molding, extrusion, rotational molding, blow molding and thermoforming. Some examples of articles include computer and business machine housings such as housings for monitors, handheld electronic device housings such as housings for cell phones, electrical connectors, and components of lighting fixtures, ornaments, home appliances, roofs, greenhouses, sun rooms, swimming pool enclosures, and the like. In an aspect, the article is an extruded article, a molded article, pultruded article, a thermoformed article, a foamed article, a layer of a multi-layer article, a substrate for a coated article, or a substrate for a metallized article. In addition, the polycarbonate compositions may be used for such applications as a molded housing and other devices such as electrical circuit housing.

Thin films including the polycarbonate compositions are also provided.. The thin films can be prepare The thin film of the thermoplastic composition can be prepared by extrusion of the polycarbonate composition. The thin films may have improved thermal resistance. In some aspects, the thin films may be transparent.

This disclosure is further illustrated by the following examples, which are nonlimiting.

### PROPHETIC EXAMPLES

The following components are used in the examples. Unless specifically indicated otherwise, the amount of each component is in wt%, based on the total weight of the composition.

The materials shown in Table 1 were used.

**Table 1.**

| | | |
|---|---|---|
| PC-1 | Linear poly(bisphenol A carbonate), CAS Reg. No, 25971-63-5, Mw = 34,000-36,000 g/mol per gel permeation chromatography (GPC) using polystyrene standards and calculated for polycarbonate | SABIC |
| PC-2 | Linear bisphenol A polycarbonate, CAS Reg. No, 25971-63-5, Mw = 30,000 - 31,000 g/mol, as determined by GPC using polystyrene standards and calculated for polycarbonate | SABIC |
| PC-3 | Branched, cyanophenol end-capped bisphenol A homopolycarbonate produced via interfacial polymerization, containing 3 mol% 1,1,1-tris(4-hydroxyphenyl)ethane (THPE) branching agent (Mw=29,000-31,000 g/mol, using polystyrene standards) | SABIC |
| PC-4 | 4/96 mol% amorphous IDHB-BPA copolymer produced by interfacial polymerization, Mw 29,000-31,000 g/mol, per GPC using polystyrene standards and calculated for polycarbonate | SABIC |
| PC-5 | 4/96 mol% amorphous EDHB-BPA copolymer produced by interfacial polymerization, Mw 29,000-31,000 g/mol, per GPC using polystyrene standards and calculated for polycarbonate | SABIC |
| PC-6 | 8/92 mol% amorphous EDHB-BPA copolymer produced by interfacial polymerization, Mw 29,000-31,000 g/mol, per GPC using polystyrene standards and calculated for polycarbonate | SABIC |
| PC-7 | 20/80 mol% amorphous EDHB-BPA copolymer produced by interfacial polymerization, Mw 29,000-31,000 g/mol, per GPC using polystyrene standards and calculated for polycarbonate | SABIC |
| PC-8 | 20/79.65/0.35 mol% amorphous EDHB-BPA-THPE copolymer produced by interfacial polymerization, Mw 29,000-31,000 g/mol, per GPC using polystyrene standards and calculated for polycarbonate | SABIC |
| PC-Si-20 | Polycarbonate-siloxane copolymer having a siloxane content of 20 wt%, average PDMS block length of 45 units, having a Mw of 28,000-32,000 g/mol as determined by GPC using polystyrene standards and calculated for polycarbonate, produced by interfacial polymerization and endcapped with p-cumylphenol | SABIC |
| PC-Si-40 | Polycarbonate-siloxane copolymer having a siloxane content of 40 wt%, average PDMS block length of 45 units, having a Mw of 37,000-38,000 g/mol as determined by GPC using polystyrene standards and calculated for polycarbonate, produced by interfacial polymerization and endcapped with p-cumylphenol | SABIC |
| ABS | Acrylonitrile butadiene styrene copolymer, CAS Reg. No. 9003-56-9 | |
| SAN | Styrene-acrylonitrile copolymer | SABIC |
| BPADP | Bisphenol A bis(diphenyl phosphate), CAS Reg. No. 5945-33-5, 8.9 wt% phosphorus | Daihachi Chemical |
| RDP | Resorcinol bis(diphenyl phosphate), CAS Reg. No. 57583-54-7, 10.8 wt% phosphorus | Daihachi Chemical |
| PPZ | Phenoxy phosphazene, 13.94 wt% phosphorus | Fushimi |
| SOLDP | Solid Phosphonate ester, 10.5 wt% phosphorus | ICL |
| TSAN | Encapsulated Polytetrafluoroethylene, CAS Reg. No. 9002-84-0, with 47-53 wt% poly(tetrafluoroethylene) | SABIC |

Sample preparation and testing methods are described in Table 2.

**Table 2.**

| Property | Standard | Conditions | Specimen Type |
|---|---|---|---|
| MVR | ISO-1133 | 300 °C, 2.16 kg, 300 sec | Pellets |
| Notched Izod (NII) | ISO 180/1A | 23 °C, -30 °C (at 5.5J) | Bar- 80mm×10mm×3mm |
| Flammability | UL 94 | Vertical Burning | |
| Flammability | UL 94 5VB | Vertical Burning | Bar- 125 mm × 13 mm × 1.5 mm. |

Flammability tests were performed on samples at a thickness of 1.5 mm, 1.0 mm, and 0.75 mm in accordance with the Underwriter's Laboratory (LTL) LTL 94 standard. In some cases, a second set of 5 bars was tested to give an indication of the robustness of the rating. In this report the following definitions are used as shown in Table 3. Total flame-out-times for all 5 bars (FOT = t1 + t2) were determined. V-ratings were obtained for every set of 5 bars.

**Table 3.**

| UL94 Rating | t₁ and/or t₂ | 5-bar FOT | burning drips |
|---|---|---|---|
| V-0 | <10 | <50 | no |
| V1 | <30 | <250 | no |
| V2 | <30 | <250 | yes |
| N.R. (no rating) | >30 | >250 | |

Flammability tests were performed on samples at a thickness of 3 mm in accordance with the Underwriter's Laboratory (LTL) LTL 94 5VB standard. A total of 10 specimens (2 sets) are tested per thickness. Five specimens of each thickness are tested after conditioning for 48 hours at 23 degrees C and 50% RH. Five specimens of each thickness are tested after conditioning for 7 days at 70 degrees C. A 125 mm overall high Bunsen burner flame with a 40 mm blue inner cone is applied to the lower corner of each specimen at an angle of 20 degrees from vertical such that the tip of the blue inner cone touches the specimen. The flame is applied for 5 seconds and removed for 5 seconds. The operation is to be repeated until each specimen has been subjected to 5 applications of the test flame. The specimens may not burn with flaming or glowing combustion for more than 60 seconds after the fifth application of the test flame. The specimens may not drip flaming particles that ignite the dry absorbent surgical cotton located 300 mm below the test specimen.

### Prophetic Examples 1-30

Tables 4-5 below provide the compositions and properties for the following comparative examples and exemplified examples of the polycarbonate composition. Comparative examples are indicated with an asterisk.

**Table 4.**

| | Unit | 1* | 2 | 3 | 4 | 5 | 6* | 7* | 8 |
|---|---|---|---|---|---|---|---|---|---|
| PC-1 | wt% | 7.5 | 7.5 | 7.5 | 7.5 | 7.5 | 7.5 | 30 | 30 |
| PC-2 | wt% | 64.05 | 45.05 | 52.05 | 55.05 | 45.05 | 52.05 | 49.2 | 18.05 |
| PC-4 | wt% | | 20 | 20 | 10 | | | | 20 |
| PC-5 | wt% | | | | | 20 | 20 | | |
| PC-Si-20 | wt% | 14 | 14 | | 14 | 14 | | | 12 |
| PC-Si-40 | wt% | | | 7 | | | 7 | | |
| Additives | wt% | 0.45 | 0.45 | 0.45 | 0.45 | 0.45 | 0.45 | 0.45 | 0.45 |
| ABS | wt% | 3 | 3 | 3 | 3 | 3 | 3 | 5.5 | 5.5 |
| SAN | wt% | | | | | | | 3.5 | 3.5 |
| BPADP | wt% | 10 | 10 | 10 | 10 | 10 | 10 | 10.5 | 10.5 |
| RDP | wt% | | | | | | | | |
| PPZ | wt% | | | | | | | | |
| SOLDP | wt% | | | | | | | | |
| TSAN | wt% | 1.0 | | | | | | 0.85 | |
| Total | wt% | 100 | 100 | 100 | 100 | 100 | 100 | 100 | 100 |
| Ester | mol% | 0 | 0.8 | 0.8 | 0.4 | 0.8 | 0.8 | 0 | 0.8 |
| Added F | wt% | 0.36 | 0 | 0 | 0 | 0 | 0 | 0.3 | 0 |
| P from P-FR | wt% | 0.89 | 0.89 | 0.89 | 0.89 | 0.89 | 0.89 | 0.94 | 0.94 |

| Properties | | | | | | | | | |
|---|---|---|---|---|---|---|---|---|---|
| ∑FOT | sec | | | | | | | | |
| Flaming drips | ---- | | | | | | | | |
| UL94 | at 1.5 mm | | | | | | | | |
| MVR | cm³/10 min | | | | | | | | |
| Impact at 23°C | | | | | | | | | |
| Impact at -30°C | | | | | | | | | |

**Table 5.**

| | Unit | 9 | 10 | 11 | 12 | 13 | 14 | 15 | 16* | 17 | 18 | 19 |
|---|---|---|---|---|---|---|---|---|---|---|---|---|
| PC-1 | wt% | 30 | 30 | 30 | 30 | 30 | 30 | 30 | 40 | 40 | 40 | 40 |
| PC-2 | wt% | 18.05 | 34.05 | 18.05 | 24.05 | 8.05 | 20.55 | 18.55 | 40.75 | 21.25 | 31.25 | 41.25 |
| PC-4 | wt% | 20 | 10 | | | 20 | 20 | 20 | | 20 | 10 | |
| PC-5 | wt% | | | 20 | 20 | | | | | | | 20 |
| PC-Si-20 | wt% | 12 | | 12 | | 12 | 12 | 12 | | | | |
| PC-Si-40 | wt% | | 6 | | 6 | | | | | | | |
| Additiv es | wt% | 0.45 | 0.45 | 0.45 | 0.45 | 0.45 | 0.45 | 0.45 | 0.75 | 0.75 | 0.75 | 0.75 |
| ABS | wt% | 5.5 | 5.5 | 5.5 | 5.5 | 5.5 | 5.5 | 5.5 | 5 | 5 | 5 | 5 |
| SAN | wt% | 3.5 | 3.5 | 3.5 | 3.5 | 3.5 | 3.5 | 3.5 | 5 | 5 | 5 | 5 |
| BPADP | wt% | 10.5 | 10.5 | 10.5 | 10.5 | | | | | | | |
| RDP | wt% | | | | | 10 | | | 8 | 8 | 8 | 8 |
| PPZ | wt% | | | | | | 8 | | | | | |
| SOLDP | wt% | | | | | | | 10 | | | | |
| TSAN | wt% | | | | | | | | 0.5 | | | |
| Total | wt% | 100 | 100 | 100 | 100 | 100 | 100 | 100 | 100 | | | |
| Ester | mol % | 0.8 | 0.8 | 0.4 | 0.8 | 0.8 | 0.8 | 0.8 | 0.8 | 0.8 | 0.4 | 0.8 |
| Added F | wt% | 0 | 0 | 0 | 0 | 0 | 0 | 0 | 0 | 0 | 0 | 0 |
| P from P-FR | wt% | 0.94 | 0.94 | 0.94 | 0.94 | 1.08 | 1.12 | 1.05 | 0.86 | 0.86 | 0.86 | 0.86 |
| ΣFOT | sec | | | | | | | | | | | |
| Flaming drips | ----- | | | | | | | | | | | |
| UL94 | at 1.5 mm | | | | | | | | | | | |
| MVR | cm³/ 10 min | | | | | | | | | | | |
| Impact at 23°C | | | | | | | | | | | | |
| Impact at -30°C | | | | | | | | | | | | |

**Table 6**

| | Unit | 20* | 21 | 22 | 23 | 24 | 25 | 26 | 27 | 28 | 29 | 30 |
|---|---|---|---|---|---|---|---|---|---|---|---|---|
| PC-1 | wt% | 5.72 | 5.72 | | | 5.72 | | | 5.72 | 5.72 | 5.72 | 5.72 |
| PC-2 | wt% | 65.82 | 41.82 | 47.04 | 17.04 | 11.82 | 22.54 | 22.04 | 46.83 | 36.83 | 46.83 | 36.83 |
| PC-3 | wt% | | | | 30 | 30 | 30 | 30 | | 10 | | 10 |
| PC-5 | wt% | | | | | | | | | | | |
| PC-6 | | | 25 | 25 | 25 | 25 | 25 | 25 | 20 | 20 | | |
| PC-7 | | | | | | | | | | | 20 | 20 |
| PC-8 | | | | | | | | | | | | |
| PC-Si-20 | wt% | 14 | 14 | 14 | 14 | 14 | 14 | 14 | 14 | 14 | 14 | 14 |
| PC-Si-40 | wt% | | | | | | | | | | | |
| Additives | wt% | 0.45 | 0.45 | 0.45 | 0.45 | 0.45 | 0.45 | 0.45 | 0.45 | 0.45 | 0.45 | 0.45 |
| ABS | wt% | 3 | 3 | 3 | 3 | 3 | 3 | 3 | 3 | 3 | 3 | 3 |
| SAN | wt% | | | | | | | | | | | |
| BPADP | wt% | 10 | 10 | 10 | 10 | 10 | 5 | 5 | 10 | 10 | 10 | 10 |
| RDP | wt% | | | | | | | | | | | |
| PPZ | wt% | | | | | | | | | | | |
| SOLDP | wt% | | | | | | | | | | | |
| TSAN | wt% | 1 | | 0.5 | 0.5 | | | 0.5 | | | | |
| Total | wt% | 100 | 100 | 100 | 100 | 100 | 100 | 100 | 100 | 100 | 100 | 100 |
| Ester | mol% | 0 | 2 | 2 | 2 | 2 | 2 | 2 | 4 | 4 | 4 | 4 |
| Added F | wt% | 0.36 | | 0.18 | 0.18 | | | 0.18 | | | | |
| P from P-FR | wt% | 0.89 | 0.89 | 0.89 | 0.89 | 0.89 | 0.445 | 0.445 | 0.89 | 0.89 | 0.89 | 0.89 |
| ∑FOT | sec | | | | | | | | | | | |
| Flaming drips | ----- | | | | | | | | | | | |
| UL94 | at 1.5 mm | | | | | | | | | | | |
| ∑FOT | sec | | | | | | | | | | | |
| Flaming drips | ---- | | | | | | | | | | | |
| UL94 | at 0.75 mm | | | | | | | | | | | |
| UL94 5VB | At 1.5mm | | | | | | | | | | | |
| MVR | cm³/10 min | | | | | | | | | | | |
| Impact at 23°C | kJ/m² | | | | | | | | | | | |
| Impact at -30°C | | | | | | | | | | | | |

This disclosure further encompasses the following aspects.

Aspect 1. A polycarbonate composition including: a homopolycarbonate; a polycarbonate including repeating units derived from a monomer including a pendant ester group; a nitrile-containing aromatic copolymer including acrylonitrile butadiene styrene copolymer, styrene acrylonitrile copolymer, or a combination thereof; a non-fluorinated flame retardant; optionally, a poly(carbonate-siloxane), optionally, an additive composition, wherein the sum of the wt% of the homopolycarbonate, the polycarbonate including repeating units derived from a monomer including a pendant ester group, the nitrile-containing aromatic copolymer, the non-fluorinated flame retardant, the optional poly(carbonate-siloxane), and the optional additive composition is 100 wt%, and wherein a sample of the composition has a LTL-94 flame test rating of V-0 at a thickness of 1.5 mm or less.

Aspect 1a. The polycarbonate composition of Aspect 1, wherein the homopolycarbonate includes a linear homopolycarbonate, a branched homopolycarbonate or a combination thereof.

Aspect 1b. The polycarbonate composition of Aspect 1, wherein the homopolycarbonate includes a linear homopolycarbonate and a polycarbonate siloxane) is present.

Aspect 1c. The polycarbonate composition of Aspect 1, wherein the homopolycarbonate includes a branched homopolycarbonate.

Aspect 1d. The polycarbonate composition of Aspect 1, wherein the homopolycarbonate includes a branched homopolycarbonate and a polycarbonate siloxane) is present.

Aspect 1e. The polycarbonate composition of Aspect 1, wherein the homopolycarbonate includes a linear homopolycarbonate and a branched homopolycarbonate.

Aspect 1f. The polycarbonate composition of Aspect 1, wherein the homopolycarbonate includes a linear homopolycarbonate and a branched homopolycarbonate and a poly(carbonate siloxane) is present.

Aspect 2. The polycarbonate composition of any one of the preceding aspects, wherein the polycarbonate composition includes 0.15 wt% or less of an anti-drip agent including fluorine, preferably wherein the polycarbonate composition excludes an anti-drip agent including fluorine.

Aspect 3. The polycarbonate composition of any one of the preceding aspects wherein: the calculated added bromine and chlorine content of the polycarbonate composition are each about 900 ppm or less and the calculated total added bromine, added chlorine, and added fluorine content of the polycarbonate composition is about 1500 ppm or less; or the calculated added bromine, added chlorine, and added fluorine content of the polycarbonate composition are each about 900 ppm or less and the calculated total added bromine, added chlorine, and added fluorine content of the polycarbonate composition is about 1500 ppm or less.

Aspect 4. The polycarbonate composition of any one of the preceding aspects, wherein the monomer having a pendant ester group has the structure of Formula (A) or Formula (B) 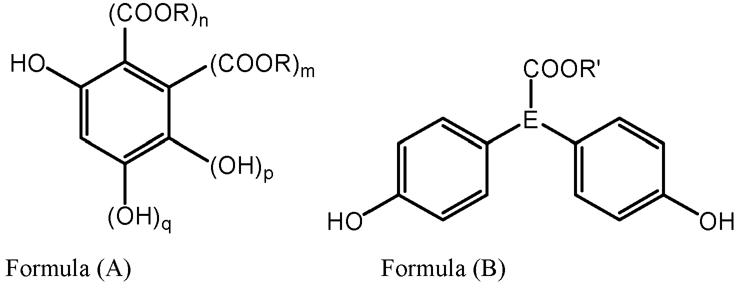 wherein each occurrence of R and R' is independently C₂-C₁₅ alkyl; each of m, n, p, and q is independently 0 or 1; m + n = 1; and p + q = 1, and E is C₁-C₁₅ alkyl, and wherein the repeating units derived from a monomer including a pendant ester group may be the same or different.

Aspect 5. The polycarbonate composition of any one of the preceding aspects, wherein the polycarbonate including repeating units derived from a monomer including a pendant ester groups is present in an amount effective to provide 0.1-5.0 mol% repeating units derived from a monomer having a pendant ester group, based on the total moles of the polycarbonate composition.

Aspect 6. The polycarbonate composition of any one of the preceding aspects, wherein the polycarbonate siloxane) is present and includes a polycarbonate siloxane) including 30 to 70 wt% siloxane repeating units, a polycarbonate siloxane) including 10 to less than 30 wt% siloxane repeating units, or a combination thereof.

Aspect 6. The polycarbonate composition of any one of the preceding aspects, wherein the non-fluorinated flame retardant includes an organophosphorus flame retardant.

Aspect 7. The polycarbonate composition of Aspect 7, wherein the organophosphorus flame retardant is present in amount effective to provide 0.7 to 1.2 wt% phosphorus, based on the total composition.

Aspect 7a. The polycarbonate composition of Aspect 6 or 7, wherein the organophosphorus flame retardant includes a monomeric or oligomeric phosphate (P(=O)(OR)₃), phosphite (P(OR)₃), phosphonate (RP(=O)(OR)₂), phosphinate (R₂P(=O)(OR)), phosphine oxide (R₃P(=O)), or phosphine (R₃P), wherein each R in the may be the same or different, provided that at least one R is an aromatic group; a monomeric or oligomeric compound having at least one phosphorus-nitrogen bond; or a combination thereof.

Aspect 7b. The polycarbonate composition of Aspect 6 or 7, wherein the organophosphorus flame retardant includes 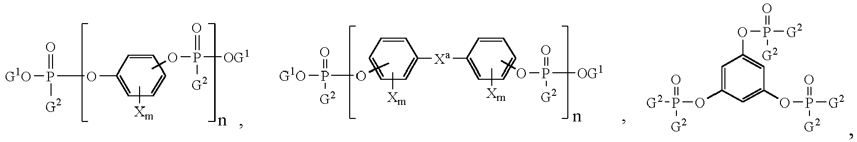 or a combination thereof, wherein each occurrence of G¹ is independently a C₁₋₃₀ hydrocarbyl; each occurrence of G² is independently a C₁₋₃₀ hydrocarbyl or hydrocarbyloxy; each X is independently a bromine or chlorine; m is 0 to 4, and n is 1 to 30.

Aspect 7c. The polycarbonate composition of Aspect 6 or 7, wherein the organophosphorus flame retardant includes 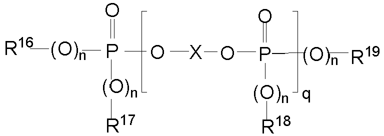 wherein R¹⁶, R¹⁷, R¹⁸, and R¹⁹ are each independently C₁₋₈ alkyl, C₅₋₆ cycloalkyl, C₆₋₂₀ aryl, or C₇₋₁₂ arylalkylene, each optionally substituted by C₁₋₁₂ alkyl, preferably by C₁₋₄ alkyl and X is a mono- or poly-nuclear aromatic C₆₋₃₀ moiety or a linear or branched C₂₋₃₀ aliphatic radical, each optionally OH-substituted and optionally including up to 8 ether bonds, provided that at least one of R¹⁶, R¹⁷, R¹⁸, R¹⁹, and X is an aromatic group.

Aspect 7d. The polycarbonate composition of Aspect 6 or 7, wherein the organophosphorus flame retardant includes phosphonitrilic chloride, phosphorus ester amide, phosphoric acid amide, phosphonic acid amide, phosphinic acid amide, or tris(aziridinyl) phosphine oxide; or a phosphazene or cyclic phosphazene of the formulas 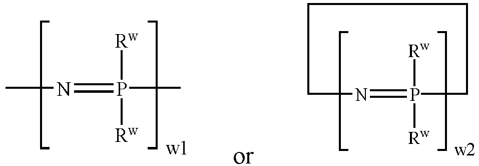 wherein w1 is 3 to 10,000; w2 is 3 to 25, or 3 to 7; and each R^{w} is independently a C₁₋₁₂ alkyl, alkenyl, alkoxy, aryl, aryloxy, or polyoxyalkylene group, optionally wherein at least one hydrogen atom is replaced with an N, S, O, or F atom, or an amino group.

Aspect 7e. The polycarbonate composition of Aspect 6 or 7, wherein the organophosphorus flame retardant includes Formula (23) 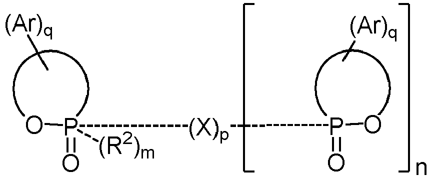 wherein q is at least 2, each occurrence of Ar is independently C₆₋₁₈ aryl, preferably benzene, optionally substituted with a C₁₋₁₈ hydrocarbyl group, or a C₁₋₁₈ hydrocarbyloxy group, and
n and p are each 0, m is 1, R² is hydrogen, C₁-C₁₈ alkyl, C₃₋₁₀ cycloalkyl, (C₁₋₆ alkyl)C₃₋₁₀ cycloalkyl, C₆₋₁₈ aryl, (C₁₋₆ alkyl)C₆₋₁₈ aryl, C₃₋₁₂ heteroaryl, or (C₁₋₆ alkyl)C₃₋₁₂ heteroaryl, any carbon-carbon single bond is optionally replaced by a carbon-carbon double or triple bond, and any methylene is optionally replaced by O, S, S(=O), C(=O), P(=O), or NR¹⁰, wherein R¹⁰ is hydrogen or C₁₋₆ alkyl, and any methylene is optionally substituted with a group having an N, S, O, or F atom, or an amino group; or n and p are each at least 1, m is 0, and X is C₁-C₁₈ alkylidene, C₃₋₁₀ cycloalkylidene, C₆₋₁₈ arylene, C₃₋₁₂ heteroarylene, or a group derived from Formula (3) 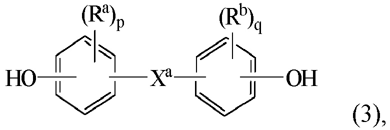 wherein R^{a} and R^{b} are each independently a halogen, C₁₋₁₂ alkoxy, or C₁₋₁₂ alkyl, and p and q are each independently integers of 0 to 4, X^{a} is single bond, -O-, -S-, -S(O)-, -S(O)₂-, -C(O)-, or a C₁₋₆₀ organic group; or a -L¹-X'-L²- group, wherein L¹ and L² linker groups are each independently a single bond, C₁-C₁₈ alkylidene, or a C₃₋₁₀ cycloalkylidene, where any carbon-carbon single bond is optionally replaced by a carbon-carbon double or triple bond, and any methylene is optionally replaced by O, S, S(=O), C(=O), P(=O), or NR¹⁰, wherein R¹⁰ is hydrogen or C₁₋₆ alkyl, and any methylene is optionally substituted with one or more substituents independently chosen from halogen, hydroxyl, cyano, and amino, X' is C₁-C₁₈ alkylidene, C₃₋₁₀ cycloalkylidene, C₆₋₁₈ arylene, C₃₋₁₂ heteroarylene, or a group derived from Formula (3).

Aspect 8. The polycarbonate composition of any one of the preceding aspects, wherein the polycarbonate composition includes 0.15 wt% or less of an anti-drip agent including fluorine, the polycarbonate including repeating units derived from a monomer including a pendant ester groups is present in an amount effective to provide 0.1-5.0 mol% repeating units derived from a monomer having a pendant ester group, based on the total moles of the polycarbonate composition, and the non-fluorinated flame retardant includes an organophosphorus flame retardant present in amount effective to provide 0.7 to 1.2 wt% phosphorus, based on the total composition.

Aspect 9. The polycarbonate composition of any one of the preceding aspects including a linear homopolycarbonate and a polycarbonate including bisphenol A carbonate units and repeating units derived from a monomer including a pendant ester group, a nitrile-containing aromatic copolymer including acrylonitrile butadiene styrene copolymer, styrene acrylonitrile copolymer, or a combination thereof, a non-fluorinated flame retardant including an organophosphorus flame retardant present in an amount effective to provide 0.7 to 1.2 wt% phosphorus, based on the total composition, and a optionally, a polycarbonate siloxane) including 10 to less than 30 wt% siloxane repeating units, polycarbonate siloxane) including 30 to 70 wt% siloxane repeating units, or a combination thereof, wherein the polycarbonate composition includes 0.15 wt% or less of an anti-drip agent including fluorine, preferably wherein the polycarbonate composition excludes an anti-drip agent including fluorine.

Aspect 10. The polycarbonate composition of any one of the preceding aspects including a combination of a linear homopolycarbonate and a branched homopolycarbonate, and a polycarbonate including bisphenol A carbonate units and repeating units derived from a monomer including a pendant ester group; a nitrile-containing aromatic copolymer including acrylonitrile butadiene styrene copolymer, styrene acrylonitrile copolymer, or a combination thereof, a non-fluorinated flame retardant including an organophosphorus flame retardant present in an amount effective to provide 0.7 to 1.2 wt% phosphorus, based on the total composition, and a polycarbonate siloxane) including 10 to less than 30 wt% siloxane repeating units, polycarbonate siloxane) including 30 to 70 wt% siloxane repeating units, or a combination thereof, and wherein the polycarbonate composition includes 0.15 wt% or less of an anti-drip agent including fluorine.

Aspect 10a. The polycarbonate composition of Aspect 10, wherein the polycarbonate including bisphenol A carbonate units and repeating units derived from a monomer including a pendant ester group is present in an amount effective to provide 2.0-5.0 mol% of ester repeating units, each based on the total monomers in the composition.

Aspect 11. The polycarbonate composition of any one of the preceding aspects, wherein the poly(carbonate siloxane) is present is an amount effective to provide up to 3 wt% siloxane repeating units, based on the total composition.

Aspect 12. The polycarbonate composition of any one of the preceding aspects, wherein the homopolycarbonate includes a weight average molecular weight of 26,000 to 40,000 g/mol, preferably 27,000 to 35,000 g/mol, as determined by gel permeation chromatography using polystyrene standards and calculated for polycarbonate.

Aspect 13. The polycarbonate composition of any one of the preceding aspects, wherein the polycarbonate siloxane) is present is an amount effective to provide up to 3 wt% siloxane repeating units, based on the total composition.

Aspect 14. An article including the polycarbonate composition of any one of the preceding aspects, preferably wherein the article is a housing for monitors, a housing for a handheld electronic device, preferably a housing for a cell phone or a personal health care device, a thin film, a housing for a consumer electronic device, preferably a battery housing, a covers, or a display panel, a housing for an electrical component, preferably an electric vehicle charger, a smart meter cover, a smart meter box, or a lighting component; an electrical connector; a component of a lighting fixture; an ornament; a home appliance; a roof; a greenhouse enclosure, a sun room enclosure, and a swimming pool enclosure

Aspect 15. A method for forming the article according to aspect 14, including molding, casting, or extruding the composition to provide the article.

The compositions, methods, and articles can alternatively include, consist of, or consist essentially of any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some aspects", "an aspect", and so forth, means that a particular element described in connection with the aspect is included in at least one aspect described herein, and may or may not be present in other aspects. In addition, it is to be understood that the described elements may be combined in any suitable manner in the various aspects. A "combination thereof' is open and includes any combination including at least one of the listed components or properties optionally together with a like or equivalent component or property not listed.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

While particular aspects have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

**1.** A polycarbonate composition comprising:
a homopolycarbonate;
a polycarbonate comprising repeating units derived from a monomer comprising a pendant ester group;
a nitrile-containing aromatic copolymer comprising an acrylonitrile butadiene styrene copolymer, a styrene acrylonitrile copolymer, or a combination thereof;
a non-fluorinated flame retardant;
optionally, a poly(carbonate-siloxane),
optionally, an additive composition,
wherein the sum of the wt% of the homopolycarbonate, the polycarbonate comprising repeating units derived from a monomer comprising a pendant ester group, the nitrile-containing aromatic copolymer, the non-fluorinated flame retardant, the optional poly(carbonate-siloxane), and the optional additive composition is 100 wt%, and
wherein a sample of the composition has a LTL-94 flame test rating of V-0 at a thickness of 1.5 mm or less.

**2.** The polycarbonate composition of Claim 1, wherein the polycarbonate composition comprises 0.15 wt% or less of an anti-drip agent comprising fluorine, preferably wherein the polycarbonate composition excludes an anti-drip agent comprising fluorine.

**3.** The polycarbonate composition of any one of the preceding claims, wherein:
the calculated added bromine and chlorine content of the polycarbonate composition are each about 900 ppm or less and the calculated total added bromine, added chlorine, and added fluorine content of the polycarbonate composition is about 1500 ppm or less; or
the calculated added bromine, added chlorine, and added fluorine content of the polycarbonate composition are each about 900 ppm or less and the calculated total added bromine, added chlorine, and added fluorine content of the polycarbonate composition is about 1500 ppm or less.

**4.** The polycarbonate composition of any one of the preceding claims, wherein the monomer having a pendant ester group has the structure of Formula (A) or Formula (B) 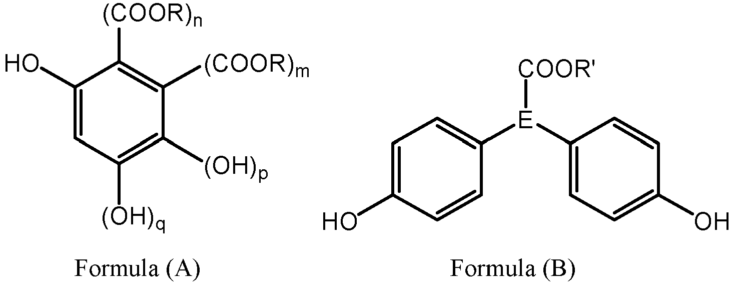 wherein each occurrence of R and R' is independently C₂-C₁₅ alkyl; each of m, n, p, and q is independently 0 or 1; m + n = 1; and p + q = 1, and E is C₁-C₁₅ alkyl, and wherein the repeating units derived from a monomer comprising a pendant ester group may be the same or different.

**4.** The polycarbonate composition of any one of the preceding claims, wherein the polycarbonate comprising repeating units derived from a monomer comprising a pendant ester groups is present in an amount effective to provide 0.1-5.0 mol% repeating units derived from a monomer having a pendant ester group, based on the total moles of the polycarbonate composition.

**5.** The polycarbonate composition of any one of the preceding claims, wherein the polycarbonate siloxane) is present and comprises a polycarbonate siloxane) comprising 30 to 70 wt% siloxane repeating units, a polycarbonate siloxane) comprising 10 to less than 30 wt% siloxane repeating units, or a combination thereof.

**6.** The polycarbonate composition of any one of the preceding claims, wherein the non-fluorinated flame retardant comprises an organophosphorus flame retardant.

**7.** The polycarbonate composition of any one of the preceding claims, wherein the non-fluorinated flame retardant comprises an organophosphorus flame retardant present in an amount effective to provide 0.7 to 1.2 wt% phosphorus, based on the total weight of the composition.

**8.** The polycarbonate composition of any one of the preceding claims, wherein
the polycarbonate composition comprises 0.15 wt% or less of an anti-drip agent comprising fluorine,
the polycarbonate comprising repeating units derived from a monomer comprising a pendant ester groups is present in an amount effective to provide 0.1-5.0 mol% repeating units derived from a monomer having a pendant ester group, based on the total moles of the polycarbonate composition, and
the non-fluorinated flame retardant comprises an organophosphorus flame retardant, present in amount effective to provide 0.7 to 1.2 wt% phosphorus, based on the total composition.

**9.** The polycarbonate composition of any one of the preceding claims comprising:
a linear homopolycarbonate;
a polycarbonate including bisphenol A carbonate units and repeating units derived from a monomer including a pendant ester group,
a nitrile-containing aromatic copolymer comprising acrylonitrile butadiene styrene copolymer, styrene acrylonitrile copolymer, or a combination thereof,
and a non-fluorinated flame retardant comprising an organophosphorus flame retardant present in an amount effective to provide 0.7 to 1.2 wt% phosphorus, based on the total composition, and
optionally, a polycarbonate siloxane) including 10 to less than 30 wt% siloxane repeating units, polycarbonate siloxane) including 30 to 70 wt% siloxane repeating units, or a combination thereof,
wherein the polycarbonate composition comprises 0.15 wt% or less of an anti-drip agent comprising fluorine, preferably wherein the polycarbonate composition excludes an anti-drip agent comprising fluorine.

**10.** The polycarbonate composition of any one of the preceding claims comprising:
a linear homopolycarbonate and a branched homopolycarbonate;
a polycarbonate including bisphenol A carbonate units and repeating units derived from a monomer including a pendant ester group,
a nitrile-containing aromatic copolymer comprising acrylonitrile butadiene styrene copolymer, styrene acrylonitrile copolymer, or a combination thereof,
and a non-fluorinated flame retardant comprising an organophosphorus flame retardant present in an amount effective to provide 0.7 to 1.2 wt% phosphorus, based on the total composition, and
optionally, a polycarbonate siloxane) including 10 to less than 30 wt% siloxane repeating units, polycarbonate siloxane) including 30 to 70 wt% siloxane repeating units, or a combination thereof,
wherein the polycarbonate composition comprises 0.15 wt% or less of an anti-drip agent comprising fluorine, preferably wherein the polycarbonate composition excludes an anti-drip agent comprising fluorine.

**11.** The polycarbonate composition of any one of the preceding aspects comprising:
a combination of a linear homopolycarbonate and a branched homopolycarbonate;
a polycarbonate including bisphenol A carbonate units and repeating units derived from a monomer including a pendant ester group, wherein the polycarbonate including bisphenol A carbonate units and repeating units derived from a monomer including a pendant ester group is present in an amount effective to provide 2.0 to 5.0 mol% of ester repeating units, based on the total monomers in the composition;
a nitrile-containing aromatic copolymer comprising acrylonitrile butadiene styrene copolymer, styrene acrylonitrile copolymer, or a combination thereof,
optionally, a polycarbonate siloxane) including 10 to less than 30 wt% siloxane repeating units, polycarbonate siloxane) including 30 to 70 wt% siloxane repeating units, or a combination thereof, wherein the poly(carbonate siloxane) is present is an amount effective to provide up to 3 wt% siloxane repeating units; and
a non-fluorinated flame retardant comprising an organophosphorus flame retardant present in an amount effective to provide 0.7 to 1.2 wt% phosphorus, based on the total composition,
wherein the polycarbonate composition comprises 0.15 wt% or less of an anti-drip agent comprising fluorine, preferably wherein the polycarbonate composition excludes an anti-drip agent comprising fluorine.

**12.** The polycarbonate composition of any one of the preceding claims, wherein the homopolycarbonate comprises a weight average molecular weight of 26,000 to 40,000 g/mol, preferably 27,000 to 35,000 g/mol, as determined by gel permeation chromatography using polystyrene standards and calculated for polycarbonate.

**13.** The polycarbonate composition of any one of the preceding claims, wherein the polycarbonate siloxane) is present is an amount effective to provide up to 3 wt% siloxane repeating units, based on the total composition.

**14.** An article comprising the polycarbonate composition of any one of the preceding claims, preferably wherein the article is a housing for monitors, a housing for a handheld electronic device, preferably a housing for a cell phone or a personal health care device, a thin film, a housing for a consumer electronic device, preferably a battery housing, a covers, or a display panel, a housing for an electrical component, preferably an electric vehicle charger, a smart meter cover, a smart meter box, or a lighting component; an electrical connector; a component of a lighting fixture; an ornament; a home appliance; a roof; a greenhouse enclosure, a sun room enclosure, a swimming pool enclosure, or a thin film.

**15.** A method for forming the article according to claim 14, comprising molding, casting, or extruding the composition to provide the article.
